**Europäisches Patentamt**

**European Patent Office**

**Office européen des brevets**

(11) Veröffentlichungsnummer: **0 461 286 A1**

## (12) EUROPÄISCHE PATENTANMELDUNG

(21) Anmeldenummer: 90111204.5

(22) Anmeldetag: 13.06.90

(51) Int. Cl.5: **B62M 1/16**

(43) Veröffentlichungstag der Anmeldung:
**18.12.91 Patentblatt 91/51**

(84) Benannte Vertragsstaaten:
**BE DE DK FR GB IT NL**

(71) Anmelder: **Horst, H.-J., Dr.**
**Tannenallee 69**
**W-2057 Reinbek 5(DE)**

(72) Erfinder: **Horst, H.-J., Dr.**
**Tannenallee 69**
**W-2057 Reinbek 5(DE)**

(54) **Zweiradsportgerät/Fahrmaschine.**

(57) Zweiradsportgerät/Fahrmachine zur Erreichung von Höchstleistungen mit beweglichen Handhebeln (1) und unbeweglichen Fußstützen (8), die unter Beteiligung aller wichtigen Körpermuskeln zur Kraftübertragung auf das antreibende Hinterrad dienen.

Ein Rollsattel (10), in Verbindung mit den unbeweglichen Fußrasten und den beweglichen Handhebeln, ermöglicht im Zusammenwirken mit einer besonderen Kettenführung (3) eine ergonometrisch optimale Kraftentfaltung, die beträchtlich über die eines konventionellen Fahr- oder Rennrades hinausgeht.

Durch die niedrige Sitzposition des Fahrers erniedrigt sich der Windwiderstandsbeiwert ($c_w$) und die Fahrsicherheit in kritischen Situationen.

Fig.1

Die Erfindung betrifft eine vorzugsweise als Zweirad ausgebildete muskelgetriebene Fahrmaschine oder ein Zweiradsportgerät, bei dem die Muskelenergie über Handhebel unter Zuhilfenahme fester Fußrasten und eines im Wesentlichen horizontal bewegten Rollsattels auf das antreibende Hinterrad übertragen wird.

Die Kraftübertragung auf das Hinterrad erfolgt vorzugsweise über ein Kettensystem, wobei sowohl die Vor- als auch die Rückwartsbewegung des Handhebels in Antriebsenergie nach vorwärts umgesetzt werden können. Eine Kraftübertragung ist auch durch andere Mittel, z.B. Zahnriemen, Zahnräder, Keilriemen, Zahnstangen etc. möglich.

Das erfindungsgemäße Zweiradsportgerät/Fahrmaschine erlaubt eine optimale Ausnutzung aller wichtigen Körpermuskeln (Arm-, Bein-, Schulter-, Rückem-, Bauch- und Gesäßmuskeln) des Fahres, wobei auch die antagonistisch wirkenden Muskeln, die beim konventionellen Fahrrad passiv bewegt werden oder nur dazu dienen, eine bestimmte Körperhaltung des Fahrers aufrechtzuerhalten, aktiv unterstützend wirken können.

Eine besondere Rolle spielen hierbei die Armmuskeln: Sie dienen beim herkömmlichen Fahrrad fast ausschließlich der Abstützung des aus Stabilitätsgründen und zur Verringerung des Windwiderstandes nach vorn geneigten Oberkörpers des Fahrers.

Bei dem erfindungsgemäßen Zweiradsportgerät/Fahrmaschine werden auch die Arme, der Schulterbereich und der Rücken einerseits sowie dei Brust- und Bauchmuskulatur andererseits voll zur Kraftentfaltung ausgenutzt. Da nahezu alle Körpermuskeln ihrer Leistungsfähigkeit entsprechend an der Fortbewegung mitwirken, ergibt sich nicht nur eine höhere Sprintleistung, sondern auch, im Zusammenwirken mit einem erniedrigtencw, eine höhere Höchstgeschwindigkeit und eine verbesserte Ausdauerleistung.

Die Bewegungen des Fahrers sind insgesamt ruhiger und bieten den Muskeln einen idealen Rhythmus von Kontraktions- und Entspannungsphase.
Mit diesem typischen Langstreckenfahrzeug wird es möglich sein, größere Stunden- oder Tagesetappen zurückzulegen als mit dem konventionellen Fahrrad. Gegenüber den sog."Liegerädern" besteht , trotz ähnlicher Körperhaltung, ein maßgeblicher Unterschied darin, daß das Liegerad herkömmliche, also kurbelnde, Pedale aufweist und daß es die Armkraft des Fahrers nicht ausnutzt.

Die Lenkung des erfindungsgemäßen Zweiradsportgeräts/Fahrmaschine ist in den Handhebel integriert und ermöglicht dadurch eine leichte Lenkbarkeit wie beim konventionellen Fahrrad. Durch seine niedrige Bauweise ist es in kritischen Situationen außerdem sicherer zu beherrschen .
Seine niedrige und leichte Bauweise prädestiniert das erfindungsgemäße Zweiradsport gerät/ Fahrmaschine zum Einsatz in windschlüpfrigen Verkleidungen (Vektoren). Ein Einbau der Antriebsvorrichtung in andere muskelgetriebene Landfahrzeuge sowie in Wasser- und Luftfahrzeuge ist ebenfalls möglich, wenn anstelle des Hinterrades ein Propeller o.dgl. angetrieben wird. Insbesondere bei Luftfahrzeugen ist mit einer deutlichen Leistungsverbesserung gegenüber den heutigen Rekordhaltern ("Gossamer Albatros", Streckenrekord 36,2 km am 12.06.1979) zu rechnen.

## BEKANNTE FAHRZEUGE

Das gegenwärtig zu beobachtende Streben nach maximaler Ausnutzung der Leistungsfähigkeit des menschlichen Körpers durch ergonometrisch optimierte oder neuentwickelte Geräte/Maschinen hat im Augenblick besonders stark den Bereich der muskelgetriebenen Zwei-, Drei- und Vierradfahrzeuge erfaßt. Durch pedalgetriebene Dreiradfahrmaschinen ("Vektoren) war es möglich, die Höchstgeschwindigkeit auf 104 km/h zu bringen. Zweiradfahrzeuge setzen die aufgewendete Kraft noch ökonomischer in Vortrieb um,,sodaß allein hierdurch eine weitere Anhebung der Rekordmarke zu erwarten ist.

Einige Erfindungen wandeln die Kurbelbewegung der Pedale in eine Auf- und Abbewegung von Trethebeln um (1 und 2), wobei vielfach auch noch Handhebel zur Hilfe genommen werden, die entweder auf das Vorderrad (3), auf das Hinterrad (2, 3 und 4) oder auf die Pedale (5 und 6) wirken. Diese Geräte können jedoch die auf das Antriebssystem wirkende Kraft nicht über das Maß eines herkömmlichen Fahr- oder Rennrades anheben, da der Unterschied zu diesem im wesentlichen darin liegt, daß die als ungünstiger angesehene Kurbelbewegung der Füße in eine alternierende Auf- und Abbewegung von Trethebeln umgewandelt wird. Bei den zum Teil mit den Trethebeln gemeinsam eingesetzten Handhebeln handelt es sich im Falle der bekannten Geräte meist um Handkurbeln, um Pendelbewegungen des Lenkers mit Übertragung auf die Trethebel oder um ein dem Ruderboot nachempfundenes Hebelsystem. Alle diese Antriebssysteme sind dem hier beschriebenen erfindungsgemäßen Zweiradsportgerät/Fahrmaschine nicht vergleichbar.

Auch die bekanntgewordenen Antriebssysteme mit Roll- oder Schwingsattel sind mit dem erfindungsgemäßen System nicht vergleichbar, da bei ersteren der Rollsattel direkt zur Aufnahme der Körperkraft und Körperbewegung und ihrer Übertragung auf das Antriebsrad/die Antriebsräder mittels Ketten, Hebel, Riemen etc. dient. Auch bei diesen Maschinen kann die Antriebsleistung nicht wesentlich über das einfache Körpergewicht des Fahrers hinausgehen. Einige bekanntgewordenen Versionen kommen nicht ohne Zwischenspeicherung der Energie durch Federn, Seilzüge etc. aus (z.B. 10).

## UNTERSCHEIDUNGSMERMALE

Die Nachteile der obengenannten Geräte werden durch die hier offengelegte Erfindung vermieden: Das erfindungsgemäße Zweiradsportgerät/Fahrmaschine ist leicht zu lenken, besteht aus nur wenigen unkomplizierten, zumeist im Fachhandel erhältlichen Teilen und ist auf die größtmögliche Kraftentfaltung sowohl beim Sprint- als auch bei Dauerleistung ausgerichtet.

Die erfindungsgemäße Fahrmaschine/Zweiradspoertgerät besteht außer aus den tragenden Teilen (Rahmen) aus einem Antriebssystem und einem Lenkungssystem.

## ANTRIEBSSYSTEM

Das Antriebssystem besteht vorzugsweise aus einem Handhebel, mit dessen unteren, am Rahmen angebrachten Ende ein Kettenradpaar fest verbunden ist. Das Ende des Handhebels und das Kettenradpaar drehen um die gleiche Achse. Diese Achse ist vergleichbar mit einer Tretlagerachse eines konventionellen Fahrrades.

Von dieser Handhebel/Kettenradeinheit wird die Kraft mittels einer Kette auf ein Kettenritzelpaar mit Freilauf übertragen. Die Übertragung der Kraft kann jedoch auchüber andere Elemente wie Zahnstangen, Zahnräder etc. erfolgen. Beide Ritzel können die Achse, auf der sie gemeinsam sitzen, nur in einer Richtung("vorwärts") drehen, sodaß sich, infolge einer besonderen Kettenführung, sowohl bei der Vorwärts als auch bei der Rückwärtsbewegung des Handhebels, und damit auch des vorderen Kettenradpaares, eine Vorwärtsdrehung der Kettenritzelachse ergibt.

Ein ebenfalls auf der Kettenritzelachse, jedoch fest sitzendes, hinteres Kettenrad wird dadurch in eine ständige Vorwärtsdrehung versetzt und kann dadurch über eine zweite Kette das Hinterrad nach Art eines konventionellen Fahrrad es antreiben.

Den nötigen Widerhalt zur Anbringung der nach hinten gerichteten Zug- und der nach vorn gerichteten Druckkraft findet der Fahrer durch die starr mit dem Rahmen verbundenenFußrasten. In Verbindung mit dem im wesentlichen horizontal beweglichen Rollsattel erlauben sie den vollen Einsatz der Beinmuskulatur: Beim Zug an den Handhebeln nach hinten stemmen sich die Füße in die Fußrasten und ermöglichen ein kraftvolles Nachhinten-stoßen des Körpers und zugleich ein Nachhinten-ziehen der Handhebel unter Nach-hinten-rollen des Rollsattels.

Beim Druck auf die Handhebel nach vorn erlauben die an den Fußrasten angebrachten Fußhaken wie beim konventionellen Rennrad ein Anziehen der Beine, wobei der Handhebel nach vorn gedrückt werden kann und der Rollsattel ebenfalls mitsamt dem Fahrer nach vorn gezogen wird. Das Nach-vorn-rollen des Rollsattels kann durch eine besondere Krümmung oder ein Gefälle des Rahmens nach vorn erleichtert werden.

Bei jeder dieser Vor- und Rückwärtsbewegungen kann das vordere Kettenradpaar nach dem Willen des Fahrers um Null bis etwa 12o Grad vor und zurück gedreht werden. Diese freie, dem individuellen Anspruch des Fahrers und der Fahrsituation anzupassende, Wählbarkeit des Ausschlagwinkels der Handhebel und damit des Drehwinkels des vorderen Kettenradpaares erleichtert die Handhabung des erfindungsgemäßen Zweiradsportgeräts/Fahrmaschine und erlaubt bei Ermüdung einzelner Muskeln die Belastung auf andere Muskeln umzuverteilen.

## LENKUNG

Die Lenkung ist in den/die Handhebel integriert. Am oberen Ende des Handhebels ist ein Lenker mit zwei Handgriffen ähnlich wie beim konventionellen Fahrrad um eine Lenkachse drehbar angebracht.

Die Lenkbewegungen könnenjedoch nicht mittels Starrachse auf das Vorderrad übertragen werden, sondern werden auf andere Weise zur Wirkung gebracht, da aufgrund der erfindungsgemäßen Bauweise die Lenkachse des Vorderrades von der Lenkerachse getrennt verläuft. In dieser Hinsicht besteht eine Ähnlichkeit zum sog."Liegerad", bei dem ebenfalls eine gesonderte Lenkachse vom Lenkhebel getrennt verläuft.

Eine bevorzugte Version der Übertragung der Lenkerbewegungen auf die Lenkachse des Vorderrades besteht darin, daß sie innerhalb des als Rohr ausgebildeten Handhebels bis zur Drehachse der vorderen beiden Kettenräder und von dort weiter innerhalb des Rahmenrohres zu der vorderen Lenkachse umgeleitet werden und zu deren Links- oder Rechtsdrehung führen. Die Übertragung kann durch Hebel, Zahnräder, Ketten, Riemen, Seilzüge etc. geschehen.

Da die Drehbewegungen des Lenkers zu einer in Richtung und Stärke gleichen Bewegung der Lenkachse des Vorderrades führen, ist eine Umgewöhnung von einem konventionellen Fahrrad auf das erfindungsgemäße Zweiradsportgerät/Fahrmaschine ohne Probleme für jedermann möglich. Die Schwierigkeiten beim Anfahren und Langsamfahren sind ebenfalls geringer als bei anderen, bekannten, Geräten, da der Fahrer erstens seine Füße sehr schnell zur Abstützung auf den Boden bringen kann und zweitens durch eine individuell sehr variable Sitzposition und Hebelbedienung das Einnehmen einer bequemen Gleichgewichtshaltung begünstigt wird. Des weiteren finden die Füße des Fahrers auf den unbeweglichen Fußrasten einen festen Widerhalt und ermöglichen eine feine Auabalancierung .

In besonderen Fällen kann der Rollsattel in einer gewünschten Stellung arretiert werden, was besonders das Erlernen des Umganges mit dem erfindungsgemäßen Zweiradsportgerät/Fahrmaschine erleichtert.

Bei höherer Geschwindigkeit besteht theoretisch die Gefahr des "Verreißens" der Lenkung durch eine unkontrollierte Armbewegung des Fahrers. Um dieses zu verhindern, kann er den Lenker bei steigendem Tempo immer mehr zur Mitte hin fassen und schließlich in der Nähe der Lenkerachse ergreifen. Dadurch wird der Einfluß unterschiedlicher Kräfte auf die linke und rechte Lenkerhälfte geringer und ein Lenken durch Verlagerung des Körpergewichts begünstigt.

Jeder Fahrer kann so selbst entscheiden, wann er von der überwiegenden Lenkerlenkung auf die Lenkung durch Verlagerung des Körpergewichts übergehen will.

GANGSCHALTUNG

Im Gegensatz zu den meisten bisher bekanntgewordenen Geräten ist bei dem hier erfindungsgemäß beschriebenen Zweiradsportgerät /Fahrmaschine jede handelsübliche Gangschaltung anwendbar: Auf dem hinteren Kettenrad können zwei bis drei Fahrbereiche und auf dem Kettenritzel des Hinterrades etwa 7 Gänge untergebracht werden ( z.B. ein komplettes Shimano- oder Sachs-System).Selbstverständlich kann auch die speziell in Deutschland sehr populäre Nabenschaltung eingebaut werden.

Obwohl auch eine Version der erfindungsgemäßen Fahrmaschine in sehr einfacher Bauart und ohne Gangschaltung viele Vorzüge gegenüber einem herkömmlichen Fahrrad aufweist, dient eine Gangschaltung einer weiteren Erhöhung der Spitzengeschwindigkeit und der individuellen Dosierung der über die Handhebel aufzubringenden Kraft. Sie ermöglicht darüberhinaus auch die individuelle Anpassung des Schlagrhythmus des Handhebels an das gewünschte Tempo: Mancher Fahrer wird bei gegebener Geschwindigkeit einen schnelleren Schlagrhythmus wählen, um die Kraft pro Schlag niedrig zu halten. In diesem Falle ist ein niedriger Gang angezeigt. Ein anderer Fahrer wird bei der gleichen Geschwindigkeit die Anzahl der Schläge geringer halten und dabei mehr Kraft pro Schlag aufwenden wollen. In diesem Falle ist ein höherer Gang zu wählen.

Andere aus dem modernen Rennradbau stammende Details wie z.B. asymmetrische Kettenradblätter, vollverkleidete Räder etc. können ebenfalls ohne Einschränkung eingesetzt werden. Das Gleiche trifft für die verwendeten Materialien zu, die ebenfalls aus dem modernen Rennradbau übernommen werden können. Aufgrund der um ein Erhebliches größeren Kraftentfaltung, insbesondere an den Fußrasten und dem Kettensystem, empfiehlt sich stärkeres Material als herkömmlich insbesondere dann, wenn eine starke Sprintleistung erbracht werden soll, oder wenn es sich um eine Geländeversion des erfindungsgemäßen Zweiradsportgeräts/Fahrmaschine handelt.

Herangezogene Schriften,

(1)    Patentschrift Nr. 812 231
(2)    Offenlegungsschrift DE 3534 266 A1
(3)    Offenlegungsschrift 2436 744
(4)    Patentschrift 211 3058
(5)    Offenlegungsschrift 2502 868
(6)    Offenlegungsschrift DE 3737 294 A1
(7)    Patentschrift 803 819
(8)    Offenlegungsschrift 2558 110
(9)    Offenlegungsschrift DE 3029 167 A1

**Patentansprüche**

1.    Muskelkraftgetriebenes Zweiradsportgerät/Fahrmaschine dadurch gekennzeichnet, daß die Antriebskraft über einen Hebelarm (1) auf ein fest mit ihm verbundenes Kettenradpaar (2) übertragen wird.

2.    Zweiradsportgerät/Fahrmaschine nach Anspruch 1 dadurch gekennzeichnet, daß von dem Kettenradpaar über eine Endloskette (3) ein Kettenritzelpaar (4) angetrieben wird.

3.    Zweiradsportgerät/Fahrmaschine nach Anspruch 1 und 2 dadurch gekennzeichnet, daß die Endloskette (3)von einem Kettenradblatt (2) zu einem Kettenritzel (4), von diesem Kettenritzel (4) wieder nach vorn zum zweiten Kettenradblatt (2a) von diesem wieder nach hinten zum zweiten Kettenritzel(4a) und von diesem wieder zum ersten Kettenradblatt (2) zurückgeführt wird, wodurch sich eine Endlosführung über die beiden Kettenradblätter 2 und 2a und die beiden Kettenritzel 4 und 4a ergibt.

4.    Zweiradsportgerät/Fahrmaschine nach Anspruch 1 bis 3 dadurch gekennzeichnet, daß die Führung der Endloskette (3) zwei unterschiedliche Schleifen beschreibt -eine gekreuzte und eine nicht gekreuzte - und dadurch, daß diese beiden Schleifen die auf sie wirkende Kraft alternierend auf jeweils ein Kettenritzel (4 oder 4a) übertragen.

5. Zweiradsportgerät/Fahrmaschine nach Anspruch 1-4 dadurch gekennzeichnet, daß die gekreuzte Schleife der Endloskette (3) nach Anspruch 3 und 4 eines der beiden Kettenritzel (4 oder 4a) beim Rückwärtsbewegen des Hebelarms (1) nach Anspruch 1 in eine Vorwärtsdrehung und die ungekreuzte zweite Schleife dabei gleichzeitig das zweite Kettenritzel (4a oder 4) in eine Rückwärtsdrehung versetzt.

6. Zweiradsportgerät/Fahrmaschine nach Anspruch 1-4 dadurch gekennzeichnet, daß bei einer Vorwärtsbewegung des Hebelarms (1) die gekreuzte Schleife der Endloskette (3) nach Anspruch 4 zu einer Rückwärtsbewegung des zuvor vorwärts bewegten Kettenritzels (4 oder 4a) und die ungekreuzte Schleife nun zu einer Vorwärtsbewegung des zuvor rückwärts bewegten Kettenritzels (4a oder 4) führt.

7. Zweiradsportgerät/Fahrmaschine nach Anspruch 1-6 dadurch gekennzeichnet, daß jedes der beiden Kettenritzel (4 und 4a) unabhängig von dem anderen auf derselben Achse gelagert ist und diese Achse durch eine Freilauffunktion immer nur in einer Drehrichtung ("vorwärts") drehen kann, während das rückwärts laufende Ritzel leer durchdreht.

8. Zweiradsportgerät/Fahrmaschine nach Anspruch 1-7 dadurch gekennzeichnet, daß die von den beiden Ritzeln angetriebene Achse nach Anspruch 7 zusätzlich mindestens ein mit ihr fest verbundenens Kettenrad (5) direkt antreibt und daß sich dieses Kettenrad (5) aufgrund der Ansprüche 2-7 nur in eine Richtung ("vorwärts") drehen kann und über eine zweite Endloskette (6) das Hinterrad (7) antreibt.

9. Zweiradsportgerät/Fahrmaschine nach Anspruch 1-8 dadurch gekennzeichnet, daß die Füße des Fahrers auf fest mit dem Rahmen verbundenen Fußrasten (8) Widerhalt finden und durch Fußhaken (9) soweit fixiert sind, daß ein Rückwärtsfuhren des Körpers in die Ausgangsposition (d.h.: Hebel 1 nach vorn, Körper nach vorn) möglich ist,

10. Zweiradsportgerät nach Anspruch 1 - 9 dadurch gekennzeichnet, daß der Sattel des Fahrers vorzugsweise als Rollsattel (10) ausgebildet ist, der sich auf dem oberen Rahmenrohr oder zwei oberen Rahmenrohren (11) durch Beugen und Strecken der Beine nach vorn und hinten bewegen läßt und für besondere Gelegenheiten in jeder Stellung arretierbar ist.

11. Zweiradsportgerät/Fahrmaschine nach Anspruch 1 - 10 dadurch gekennzeichnet, daß der Rollsattel eine individuell einstellbare gleichmäßige oder ungleichmäßige nach hinten ansteigende Bewegung ausführt, um bei der ergonometrisch begünstigten Rückwärtsbewegung kinetische Energie für die anschließende, weniger begünstigte Vorwärtsbewegung zu speichern.

12. Zweiradsportgerät/Fahrmaschine nach Anspruch 1 - 11 dadurch gekennzeichnet, daß die Lenkung an einem Hebelarm (1) nach Anspruch 1 angebracht ist und die Drehbewegungen des Lenkers (12) vorzugsweise über ein Gestänge (13) auf die Lenkachse (14), die Vorderradgabel (15) und das Vorderrad (16) überträgt.

13. Zweiradsportgerät/Fahrmaschine nach Anspruch 1-12 dadurch gekennzeichnet, daß auf eine der beiden Schleifen der Antriebskette (3) nach Anspruch 4 verzichtet werden kann, wenn eine Kraftübertragung auf das Kettenrad (5) nach Anspruch 10 nur bei einer Vorwärts- oder nur bei einer Rückwärtsbewegung des Hebelarms (1) nach Anspruch11 erfolgen soll.

14. Zweiradsportgerät/Fahrmasohine nach Anspruch 1-12 dadurch gekennzeichnet, daß bei einer Vereinfachung des Antriebes nach Anspruch 13 eine einzige sich überkreuzende Endlos-Antriebskette von einem vorderen Kettenrad (2) nach Anspruch 1 zu einem freilaufgelagerten Hinterradkettenritzel(8) führt und dieses antreibt.

15. Zweiradsportgerät/Fahrmaschine nach Anspruch 1-12 dadurch gekennzeichnet, daß die Freilauffunktion der beiden Kettenritzel (4 und 4a) durch eine entsprechende Funktion der Kettenradblätter oder eines einzigen Kettenrades (2 oder 2a) ersetzt werden kann, wodurch sich eine Führung der Kette (3) in 2 unterschiedlichen Schleifen gemäß Anspruch 4 erübrigt.

Fig.1

EP 0 461 286 A1

6

Fig.2

Fig.3

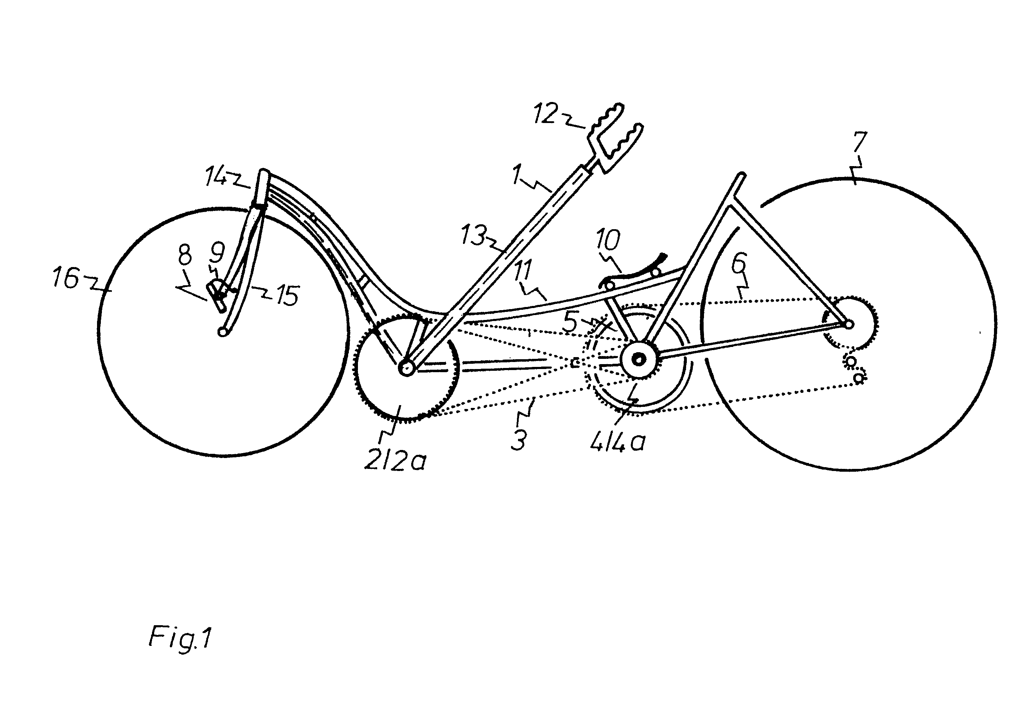

Abb.1: Fußrasten (8) mit Fußhaken (9,ohne Riemen), Handhebel (1) mit
fest verbundenen Kettenrädern (4/4a) und Endloskette (3)

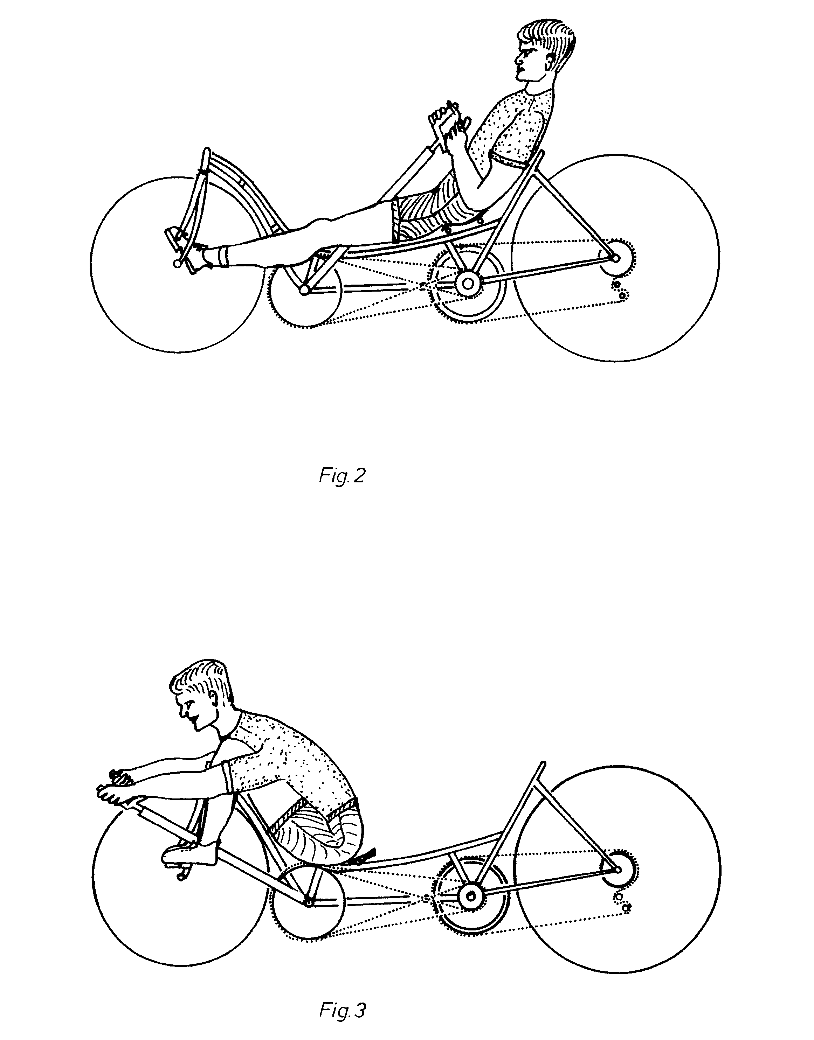

Abb.2: Vorderes Kettenradpaar
(2/2a) mit vorderer Endloskette (3)

Abb.3: Kettenritzelpaar (4/4a) mit vorderer Endloskette (3)

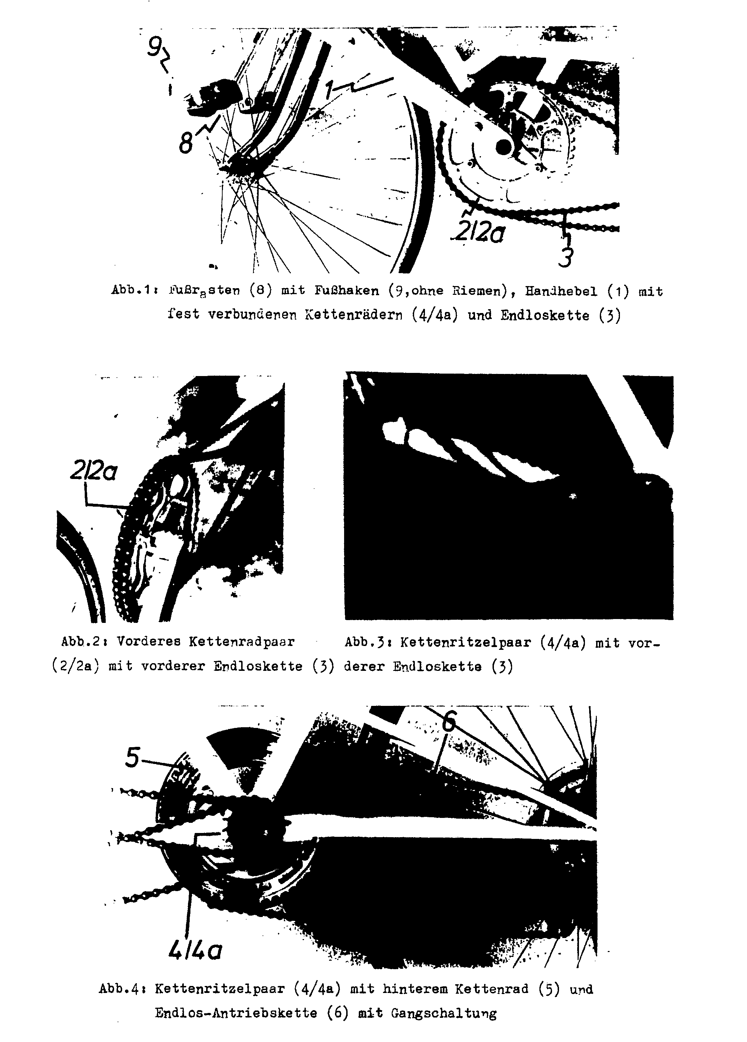

Abb.4: Kettenritzelpaar (4/4a) mit hinterem Kettenrad (5) und
Endlos-Antriebskette (6) mit Gangschaltung

| Europäisches Patentamt | EUROPÄISCHER RECHERCHENBERICHT | Nummer der Anmeldung |
|---|---|---|
| | | EP 90 11 1204 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | US-A-2 232 120 (R.LETSCH) <br> * das ganze Dokument * <br> — — — | 1,2,7,8,12 | B 62 M 1/16 |
| Y,A | FR-A-5 280 27 (J.GUTH) <br> * das ganze Dokument * <br> — — — | 1,2,7,3,4, 15 | |
| A | FR-A-4 473 45 (F.LICHTLE) <br> * Seite 1, Zeilen 55 - 58; Figur 7 * <br> — — — | 1,2,13,14 | |
| A | FR-A-7 695 94 (P.ULYSSE) <br> * Seite 2, Zeilen 28 - 49; Figuren 7-9 * <br> — — — | 1,2,9,10, 12 | |
| A | BE-A-9 018 55 (P.DE WEERT) <br> * das ganze Dokument * <br> — — — | 1,2,9,10, 12 | |
| A | DE-C-4 355 59 (O.POHLE) <br> * Seite 2, Zeilen 17 - 47; Figuren * <br> — — — | 1,2 | |
| A | WO-A-9 003 304 (BACKWAVE LTD.) <br> * Figuren 4-8 * <br> — — — | 1,2 | RECHERCHIERTE SACHGEBIETE (Int. Cl.5) |
| A | DE-A-2 426 011 (W.HERBST) <br> * das ganze Dokument * <br> — — — — — | 1,2,9-11 | B 62 M <br> A 63 B |

Der vorliegende Recherchenbericht wurde für alle Patentansprüche erstellt

| Recherchenort | Abschlußdatum der Recherche | Prüfer |
|---|---|---|
| Den Haag | 24 Januar 91 | CZAJKOWSKI A.R. |